# EUROPÄISCHE PATENTSCHRIFT

(11) **EP 2 795 910 B1**
(45) Veröffentlichungstag und Bekanntmachung des Hinweises auf die Patenterteilung: **14.08.2019**
(21) Anmeldenummer: 12816659.2
(22) Anmeldetag: 20.12.2012
(51) Int. Cl.: H04N 21/242, H04J 3/06

(54) **VERFAHREN UND SYSTEM ZUR OPTIMIERUNG EINER KURZZEITSTABILITÄT EINES TAKTES**
METHOD AND SYSTEM FOR OPTIMIZING THE SHORT-TERM STABILITY OF A CLOCK
PROCEDE ET SYSTEME POUR OPTIMISER LA STABILITÉ À COURT TERME D'UNE HORLOGE

(30) Priorität: 23.12.2011 DE 102011089721; 15.03.2012 DE 102012204084
(43) Veröffentlichungstag der Anmeldung: 29.10.2014
(73) Patentinhaber: Rohde & Schwarz GmbH & Co. KG, 81671 München (DE)
(72) Erfinder: HERZOG, Norman, 10179 Berlin (DE)
(74) Vertreter: Körfer, Thomas
(86) Internationale Anmeldenummer: PCT/EP2012/076370
(87) Internationale Veröffentlichungsnummer: WO 2013/092853

(56) Entgegenhaltungen:
- WO-A1-2009/132456
- WO-A2-2007/117756
- US-A- 5 943 381
- US-A1- 2004 062 278
- BURBANK W KASCH JHU/APL J MARTIN J ET AL: "Network Time Protocol Version 4 Protocol And Algorithms Specification; draft-ietf-ntp-ntpv4-proto-13.txt", NETWORK TIME PROTOCOL VERSION 4 PROTOCOL AND ALGORITHMS SPECIFICATION; DRAFT-IETF-NTP-NTPV4-PROTO-13.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, Bd. ntp, Nr. 13, 9. Oktober 2009 (2009-10-09), XP015064480, [gefunden am 2009-10-10]

## Beschreibung

Die Erfindung betrifft ein Verfahren und ein System zur Optimierung einer Kurzzeitstabilität eines Taktes.

In Netzwerken, insbesondere in Netzwerken mit hohen Echtzeitanforderungen wie beispielsweise in einer Kopfstation (so genanntes Headend), in der ein digitaler Datenstrom mit zu verschiedenen Programmen jeweils gehörigen Video- und Audiodaten zur Übertragung in einem digitalen Rundfunksystem erzeugt wird, werden die eingesetzten Taktquellen mit einer Referenztaktquelle synchronisiert. Als Referenztaktquelle dient hierbei die Global-Position-System(GPS)-Zeit, welche über GPS-Satelliten als Zeitsignal mit hoher Genauigkeit in Form von Sekundenimpulsen (1 Pulse-Per-Second (PPS)) oder in Form eines 10 MHz Referenztaktes ausgestrahlt wird, oder das Network-Time-Protocol (NTP), das über ein datenpaketorientiertes Netzwerk, bevorzugt über das Internet, auf Anfrage eines nachfragenden Clients Referenzzeitinformationen der Universal-Time-Coordinated (UTC)-Zeit von einem NTP-Server versendet.

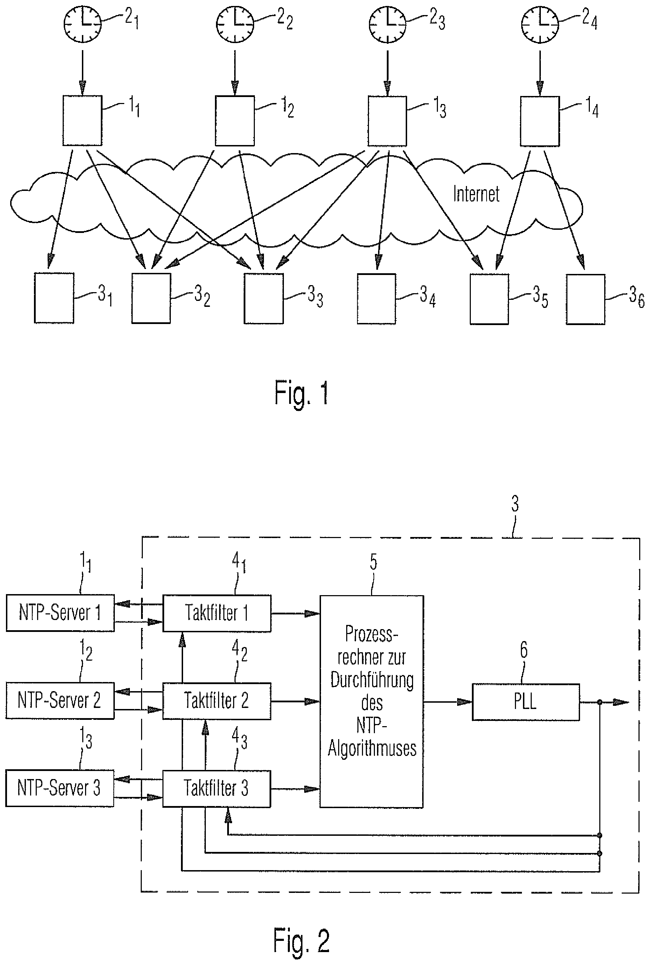

Gemäß Fig. 1 werden von primären Zeit-Servern 1₁, 1₂, 1₃ und 1₄, den sogenannten NTP-Servern, die mit einer hoch genauen Referenzzeitquelle 2₁, 2₂, 2₃ und 2₄, der UTC-Referenzzeitquelle, gekoppelt sind, auf Anfrage eines sekundären Servers 3₁, 3₂, 3₃, 3₄, 3₅ und 3₆ in Datenpaketen auf der Referenzzeit basierende Zeitstempelinformationen verschickt. Aufgrund der Übertragungszeit vom nachfragenden sekundären Server zum NTP-Server und vom NTP-Server zum nachfragenden sekundären Server, die von der Höhe des Datenverkehrs im Internet abhängt, erhält der nachfragende sekundäre Server die angefragte Zeit mit einem statistischen Zeitverzug. Dieser statistische Zeitverzug, der zu einer Ungenauigkeit der Zeit im nachfragenden sekundären Server führt, muss über geeignete Algorithmen weitest möglich minimiert werden.

Eine Möglichkeit zur Minimierung der Ungenauigkeit der nachgefragten Zeit erfolgt gemäß Fig. 2 durch Anfrage der nachfragenden Taktfilter 4₁, 4₂ und 4₃ des sekundären Servers 3 bei mehreren NTP-Servern. Aus allen empfangenen Zeiten wird in einem Teilrechner 5 des sekundären Servers 3 mittels eines NTP-Algoritmuses die minimale Zeit ausgewählt, die der kleinsten Übertragungsverzögerung entspricht. Schließlich werden auch NTP-Server aussortiert, bei denen die Übertragungszeit von der Zeitanfrage bis zum Empfang der Zeitinformation großen statistischen Schwankungen unterworfen ist und/oder die Zeitinformation grundsätzlich falsch ist.

Eine weitere Minimierung dieses statistischen Zeitverzugs wird durch einen im sekundären Server 3 integrierten Phasenregelkreis 6, einen sogenannten Phase-Locked-Loop (PLL), realisiert, in dem die empfangenen Zeiten, die im NTP-Server seit einem Initialisierungszeitpunkt bis zum jeweiligen Sendezeitpunkt gezählte Takte der zugehörigen Referenzzeitquelle und somit Phasen darstellen, mit den gezählten Takten der zugehörigen Referenzzeitquelle zum Empfangszeitpunkt der einzelnen Zeitstempelinformationen im sekundären Server 3, die ebenfalls Phasen darstellen, verglichen und ausgeregelt werden. Im Phasenregelkreis erfolgt durch Mittelung über mehrere Phasendifferenzen in einem Mittelungsfilter eine Minimierung dieses Phasenjitters bzw. Phasenrauschens. Die zum Empfangszeitpunkt der einzelnen Zeitstempelinformation im sekundären Server gezählte Taktanzahl der zugehörigen Referenzzeitquelle ergibt sich aus der empfangenen Taktanzahl zuzüglich der im Zeitintervall zwischen Sendezeitpunkt im primären Server und Empfangszeit im sekundären Server gezählten Takte der zugehörigen Referenzzeitquelle. Der Sendezeitpunkt im primären Server wird näherungsweise als Mittelwert zwischen dem Zeitpunkt der Zeitanfrage durch den sekundären Server und dem Zeitpunkt des Empfangs der zugehörigen Zeitstempelinformation im sekundären Server gewählt. Aus der DE 10 2009 057 362 A1 ist eine Taktquelle für eine Kopfstation bekannt, deren Takt ebenfalls mit dem langezeitstabilen Referenztakt eines NTP-Servers synchronisiert wird. Zur gleichzeitigen Erhöhung der Kurzzeitstabilität des Taktes der Taktquelle wird der langzeitstabile Referenztakt des NTP-Servers mit dem kurzzeitstabilen Referenztakt einer weiteren Referenztaktquelle interpoliert.

US 2004/062278 A1 beschreibt eine Methode und ein System zur Synchronisation eines lokalen Taktes mit einer entfernten Taktquelle in asynchronen Telekommunikationsnetzwerken.

Sowohl die Durchführung der Mittelung als auch der Interpolation benötigt eine gewisse Verarbeitungszeit, innerhalb der eine Drift des Taktes der Taktquelle im sekundären Server auftritt, die zu einem kumulierten Zeit-Offset der Tatquelle von typischerweise einigen zehn Millisekunden innerhalb einer Laufzeit von einer Stunde führt. Eine Änderung der Umgebungstemperatur führt hierbei zu einer relativ schnellen Frequenzänderung der Taktquelle, welche durch die Mittelung erst verspätet erkannt und ausgeregelt wird. Dies kann bei den Echtzeitanwendungen einer Kopfstation zu einem Überlauf oder zu einem Leerlauf der Puffer, in denen die einzelnen Datenpakete des zu übertragenden digitalen Transportdatenstroms zwischengespeichert werden, und damit zu einem Verlust von zu senden Datenpaketen oder zu einer Übertragungslücke führen, die jeweils nicht tolerierbare Betriebszustände darstellen.

Aufgabe der Erfindung ist es deshalb, ein Verfahren und ein System zur reaktionsschnellen Optimierung der Kurzzeitstabilität eines Taktes einer Taktquelle zu schaffen, die bereits mit einem langezeitstabilen Referenztakt synchronisiert ist.

Die Erfindung wird durch ein erfindungsgemäßes Verfahren zur Optimierung einer Kurzzeitstabilität eines Taktes mit den Merkmalen des Patentanspruchs 1 und durch ein erfindungsgemäßes System zur Optimierung einer Kurzzeitstabilität eines Taktes mit den Merkmalen des Patentanspruchs 12 gelöst. Vorteilhafte technische Erweiterungen sind in den jeweils abhängigen Patentansprüchen aufgeführt.

Im erfindungsgemäßen Verfahren und im erfindungsgemäßen System werden zusätzlich zur Übertragung einer Taktanzahl eines ersten Referenztaktes einer ersten Referenztaktquelle, die jeweils zwischen einem Initialisierungszeitpunkt und einzelnen Zeitpunkten in der ersten Referenztaktquelle gezählt werden, über ein datenpaketorientiertes Netzwerk zu einer Taktquelle und einer Taktgenerierung in der Taktquelle durch Ausregeln der jeweils übertragenen Taktanzahl mit der in der Referenztaktquelle gezählten Takte zwischen dem Initialisierungszeitpunkt und dem Empfangszeitpunkt der jeweils übertragenen Taktanzahl in der Taktquelle eine Taktanzahl eines zweiten Referenztaktes einer zweiten Referenztaktquelle zur Taktquelle übertragen.

Die zweite Referenztaktquelle ist gegenüber der ersten Referenztaktquelle bevorzugt freilaufend, so dass ihre zu den einzelnen Zeitpunkten jeweils gezählten Takte in keiner Relation zu den zeitkorrekten Taktanzahlen der ersten Referenztaktquelle stehen. Die maximale Abweichung des zweiten Referenztaktes zum zeitkorrekten ersten Referenztakt ist vorzugsweise bekannt und konstant. Somit stellt der zweite Referenztakt einen Korridor für eine maximale Abweichung des in der Taktquelle aus den durch die Übertragung zeitverzögerten Taktanzahlen des ersten Referenztaktes ermittelten und damit fehlerbehafteten ersten Referenztaktes zum korrekten in der ersten Referenztaktquelle erzeugten ersten Referenztakt dar. Auf diese Weise wird in einer ersten Ausführungsform der Erfindung die Differenz zwischen dem von der Taktquelle erzeugten Takt und dem zweiten Referenztakt auf die bekannte maximale Differenz zwischen ersten oder zweiten Referenztakt begrenzt, indem der von der Taktquelle erzeugte Takt in einer übergeordneten Frequenz- bzw. Taktregelung so geregelt wird, dass diese Bedingung erfüllt ist.

Zur Rekonstruktion des zweiten Referenztaktes in der Taktquelle werden in der zweiten Referenztaktquelle die einzelnen gezählten Taktanzahlen des zweiten Referenztaktes in einer konstanten Periodizität an die Taktquelle über ein zweites Netzwerk gesendet, das bevorzugt ein lokales Hochgeschwindigkeitsnetz mit geringen Übertragungszeiten ist. Da der zweite Referenztakt in der Taktquelle aus den einzelnen, von der zweiten Referenztaktquelle jeweils empfangenen Taktanzahlen des zweiten Referenztaktes ermittelt wird, die gegenüber den Taktanzahlen des zweiten Referenztaktes zum zugehörigen Sendezeitpunkt geringfügig statistisch zeitverschoben sind, ergibt sich eine geringfügige Abweichung zwischen dem in der Taktquelle ermittelten zweiten Referenztakt und dem in der zweiten Referenztaktquelle korrekt erzeugten zweiten Referenztakt. Eine Berücksichtigung dieser Abweichung des zweiten Referenztaktes wird dadurch berücksichtigt, dass die Differenz zwischen dem von der Taktquelle erzeugten Takt und dem in der Taktquelle ermittelten zweiten Referenztakt auf eine um einen ersten einstellbaren Schwellwert erhöhte maximale Differenz zwischen ersten und zweiten Referenztakt begrenzt wird.

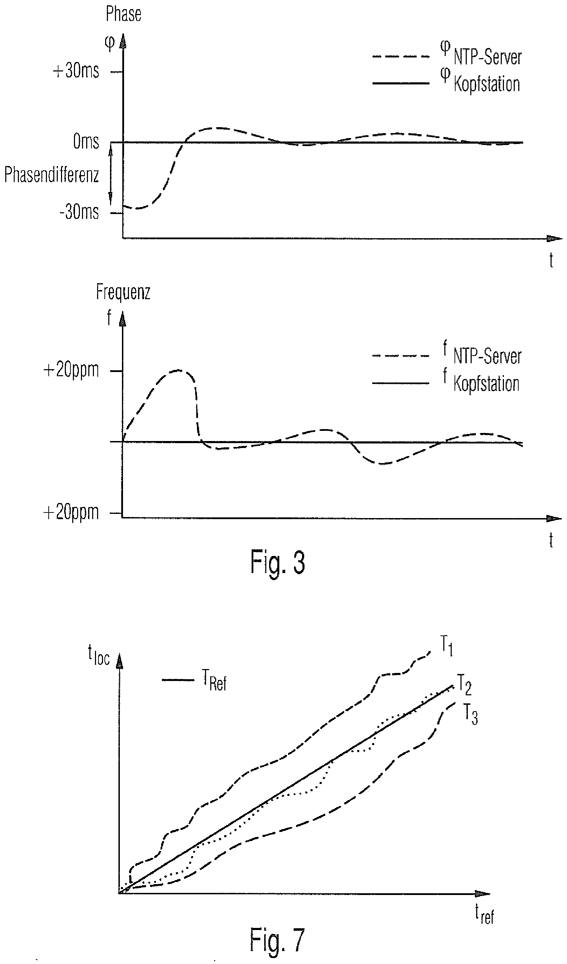

Die Erzeugung des Taktes in der Taktquelle aus den empfangenen Taktanzahlen des ersten Referenztaktes erfolgt durch eine Phasen- und/oder Frequenzregelung. Im Fall einer Phasenregelung wird die empfangene Taktanzahl des ersten Referenztaktes an die in der Taktquelle ermittelte, in der ersten Referenztaktquelle zum Empfangszeitpunkt der zu übertragenden Taktanzahl des ersten Referenztaktes gezählte Taktanzahl des ersten Referenztaktes geregelt. Die zur Anpassung der Taktanzahl des ersten Referenztaktes erforderliche Frequenz eines in der Phasenregelung integrierten Frequenzoszillators gemäß Fig. 3 stellt die zumindest im Zeitintervall des Ausregelns erforderliche Änderung des Taktes der Taktquelle und somit die im Zeitintervall des Ausregelns vorhandene Abweichung des aktuell in der Taktquelle erzeugten Takts vom korrekten ersten Referenztakt dar. Der zweite Referenztakt stellt auch hier einen Korridor für die Abweichung zwischen dem aktuellen in der Taktquelle erzeugten Takt vom korrekten ersten Referenztakt dar, so dass die Differenz zwischen dem in der Tatquelle erzeugten Takt und dem zweiten Referenztakt in einer zweiten Ausführungsform der Erfindung auf einem zweiten einstellbaren Schwellwert begrenzt wird.

Der zweite Referenztakt wird in einer ersten Variante der Erfindung in einer einzigen zweiten Referenztaktquelle erzeugt und an die Taktquelle übertragen.

In einer zweiten Variante der Erfindung werden in mehreren zweiten Referenztaktquellen jeweils zweite Referenztakte erzeugt und zur Taktquelle übertragen. In der Taktquelle erfolgt die Ermittlung des zweiten Referenztaktes durch Mittelung über alle empfangenen zweiten Referenztakte. Weisen die einzelnen zweiten Referenztaktquellen jeweils einen nicht temperaturkompensierten Frequenzoszillator zur Erzeugung des einzelnen zweiten Referenztaktes auf, so driften die einzelnen zweiten Referenztakt bei einer Temperaturänderung in dieselbe Richtung und eine Verbesserung der Genauigkeit des zweiten Referenztaktes in der Taktquelle ist durch die Mehrfachauslegung der zweiten Referenztaktquellen nicht gegeben. Sind die Frequenzoszillatoren in den einzelnen zweiten Referenztaktquellen dagegen alle temperaturkompensiert, so ist die Drift der einzelnen zweiten Referenztakte nur noch auf die deutlich geringer ausgeprägte Exemplarstreuung und Kompensationsungenauigkeit der einzelnen Frequenzoszillatoren begrenzt und der in der Taktquelle gemittelte zweite Referenztakt weist eine deutlich höhere Genauigkeit auf.

Im Fall eines Ausfalls des datenpaketorientierten Netzwerkes, d.h. z. B. im Fall eines Ausfalls des Internets, von der ersten Referenztaktquelle zur Taktquelle wird der zweite Referenztakt in der Taktquelle kontinuierlich aus den empfangenen Taktanzahlen des zweiten Referenztaktes mittels linearer Regression über eine bestimmte Anzahl von empfangenen Taktanzahlen ermittelt und der Takt der Taktquelle im Rahmen einer Frequenzregelung mit dem ermittelten zweiten Referenztakt als Referenzsollwert bestimmt wird.

Alternativ wird im Fall eines Ausfalls des datenpaketorientierten Netzwerkes von der ersten Referenztaktquelle zur Taktquelle aus den bis zum Zeitpunkt des Ausfalls des datenpaketorientiertes Netzwerkes empfangenen Taktanzahlen der ersten Referenztaktquelle mittels linearer Regression ein erster Referenztakt ermittelt, der für den Zeitraum des Ausfalls als Frequenzsollwert einer den Takt der Taktquelle regelnden Frequenzregelung dient. Aufgrund fehlender Kurzzeitstabilität des ersten Referenztaktes und ausbleibender Taktanzahlen des ersten Referenztaktes während des Ausfalls des datenpaketorientierten Netzwerkes ist die Genauigkeit eines derart erzeugten Taktes gegenüber dem in einer Frequenzregelung mit dem zweiten Referenztakt als Frequenzsollwert erzeugten Takt deutlich geringer.

Wird der Abstand zwischen dem Takt der Taktquelle und dem zweiten Referenztakt größer als ein dritter einstellbarer Schwellwert, liegt also ein deutlicher Abstand zwischen dem in der Taktquelle erzeugten Takt, der typischerweise vom ersten Referenztakt abweicht, und dem in der ersten Referenztaktquelle korrekt erzeugten ersten Referenztakt, so wird in einer dritten Ausführungsform der Erfindung die Rate, mit der Taktanzahlen des ersten Referenztaktes von der ersten Referenztaktquelle zur Taktquelle übertragen werden, erhöht. Auf diese Weise wird der erste Referenztakt in der Taktquelle in kürzeren Zeitabständen rekonstruiert und damit eine Drift des in der Taktquelle erzeugten Taktes vom korrekten ersten Referenztakt minimiert.

Die einzelnen Ausführungsformen und Varianten des erfindungsgemäßen Verfahrens und des erfindungsgemäßen Systems zur Optimierung einer Kurzzeitstabilität eines Taktes werden im Folgenden anhand der Zeichnung im Detail erläutert. Die Figuren der Zeichnung zeigen:
- Fig. 1: ein Blockdiagramm eines Systems zur Taktsynchronisierung mehrerer Datenverarbeitungseinheiten mittels Network-Time-Protocol,
- Fig. 2: ein Blockdiagramm eines Systems zur Taktsynchronisierung einer Datenverarbeitungseinheit mittels Network-Time-Protocol,
- Fig. 3: ein Zeitdiagramm der Phase und der Frequenz in einem Phasenregelkreis,
- Fig. 4: ein Blockdiagramm eines Systems zur Optimierung einer Kurzzeitstabilität eines Taktes gemäß einem erfindungsgemäßen Ausführungsbeispiel,
- Fig. 5: ein Diagramm zur Darstellung der relative Frequenzänderung eines Quarzoszillators in Abhängigkeit der Temperatur und des Schnittwinkels des Quarzes gemäß einem erfindungsgemäßen Ausführungsbeispiel,
- Fig. 6: ein Diagramm zur Darstellung der relativen Taktänderung bei Mittelung über die von mehreren temperaturkompensierten Quarzoszillatoren erzeugten Takte gemäß einem erfindungsgemäßen Ausführungsbeispiel,
- Fig. 7: ein Zeitdiagramm der kumulierten Takte von mehreren Taktgebern mit jeweils unterschiedlicher Frequenzdrift gemäß einem erfindungsgemäßen Ausführungsbeispiel,
- Fig. 8A: ein Flussdiagramm einer ersten Ausführungsform des erfindungsgemäßen Verfahrens zur Optimierung einer Kurzzeitstabilität eines Taktes,
- Fig. 8B: ein Flussdiagramm einer zweiten Ausführungsform des erfindungsgemäßen Verfahrens zur Optimierung einer Kurzzeitstabilität eines Taktes und
- Fig. 8C: ein Flussdiagramm einer dritten Ausführungsform des erfindungsgemäßen Verfahrens zur Optimierung einer Kurzzeitstabilität eines Taktes.

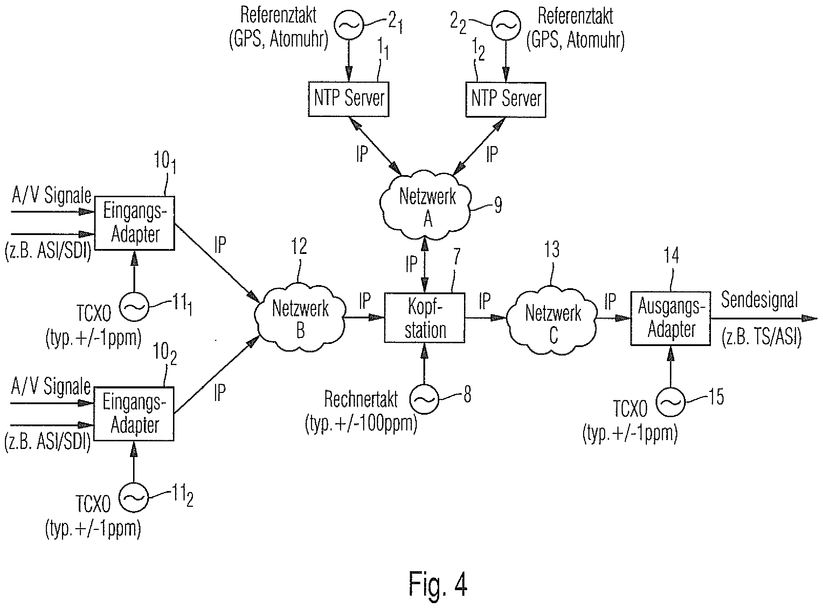

Ein Ausführungsbeispiel eines erfindungsgemäßen Systems zur Optimierung einer Kurzzeitstabilität eines Taktes für eine Taktquelle in einem Prozessrechner, bevorzugt in einer Kopfstation einer Rundfunkstation, ist in Fig. 4 dargestellt.

Die Kopfstation (Headend) 7 einer Rundfunkanstalt, in der verschiedene Video- und Audio-Datenströme verschlüsselt und zu einem einzigen digitalen verschlüsselten Transportdatenstrom zusammengefasst werden, ist typischerweise durch einen Prozessrechner realisiert, d.h. durch einen Server mit einer genügend hohen Rechenleistung zur Realisierung der Signalverarbeitungsfunktionen in Echtzeit.

Der Server der Kopfstation 7 wird durch eine interne Taktquelle 8 getaktet, die gegenüber einer Referenztaktquelle - beispielsweise der GPS-Zeit oder der bei NTP-Servern verwendeten UTC-Zeit - eine vergleichsweise geringe Genauigkeit aufweist. Diese liegt bei handelsüblichen Servern typischerweise in der Größenordnung von +/- 100 ppm. Eine derartig schlechte Genauigkeit einer Taktquelle führt zu einer Drift - das heißt einer Taktänderung - des von der Taktquelle erzeugten Taktes, die in eine Ungenauigkeit der Uhrzeit der Taktquelle gegenüber einer Referenz-Uhrzeit einer Referenztaktquelle in der Größenordnung von einigen zehn Millisekunden über eine Laufzeit von einer Stunde mündet. Eine derartige Ungenauigkeit in der absoluten Uhrzeit der Taktquelle ist für den Echtzeitbetrieb einer Kopfstation nicht akzeptabel, da die Datenpakete des verschlüsselten Transportdatenstroms, die mit einem Zeitstempel aus der Taktquelle versehen sind, in den Puffern der einzelnen Sender entweder zu lange zwischengespeichert werden und damit einen Überlauf der Puffer verursachen oder zu kurz zwischengespeichert werden und damit einen Leerlauf der Puffer verursachen. In beiden Fällen kommt es zu einer unerwünschten Betriebsstörung.

Zur Erhöhung der Genauigkeit der internen Taktquelle 8 wird der Takt diese Taktquelle 8 zum Referenztakt einer Referenztaktquelle synchronisiert. Hierzu werden, wie oben schon erwähnt wurde, über ein datenpaketorientiertes Netzwerk 9, bevorzugt über das Internet, mittels der Methode des Network-Time-Protocol (NTP) von mehreren NTP-Servern 1₁ bzw. 1₂, die jeweils mit einer hoch genauen Referenzzeitquelle 2₁ bzw. 2₂ (der UTC-Referenzzeit) gekoppelt sind, die in den einzelnen NTP-Servern 1₁ bzw. 1₂ zu einem bestimmten Abrufzeitpunkt seit einem Initialisierungszeitpunkt gezählte Taktzyklenanzahl der Referenzzeitquelle 2₁ bzw. 2₂ an die Kopfstation 7 übertragen. Über Details zur Methodik des Network-Time-Protocol (NTP) sei auf David L. Mills "Internet Time Protocol: The Network Time Protocol", IEEE Transactions on Communications, Vol. 39, No. 10, Oktober 1991, Seiten 1482 bis 1493, verwiesen.

Die einzelnen zu den jeweiligen Programmen jeweils gehörigen Video- und Audio-Datenströme, die in einem oder mehreren Studios erzeugt werden, werden in verschiedenen Datenformaten (beispielsweise Serial-Digital-Interface (SDI) für unkomprimierte digitale Videodaten, Asynchronous-Serial-Interface (ASI) für vorkomprimierte digitale Videodaten und Audio-Engineering-Society-3 (AES3) für digitale Audiodaten) von den einzelnen Studios zur Kopfstation 7 übertragen. Diese werden dann in zugeordneten Eingangs-Adaptern 10₁ und 10₂, die in der Nähe der Kopfstation 7 platziert sind und mit Taktquellen 11₁ und 11₂ mit einer vergleichsweise hohen Genauigkeit in der Größenordnung von +/- 1 ppm gekoppelt sind, in Datenpakete gefüllt, die über ein lokales Hochgeschwindigkeitsnetzwerk 12, bevorzugt über ein Intranet, zur Kopfstation 7 übertragen werden.

Analog wird der von der Kopfstation 7 erzeugte Transportdatenstrom mit seinen einzelnen Datenpaketen über ein lokales Hochgeschwindigkeitsnetzwerk 13, bevorzugt über das Intranet, zu einem in der Nähe der Kopfstation 7 platzierten Ausgangs-Adapter 14 mit einer Taktquelle 15 mit einer hohen Frequenzstabilität in der Größenordnung von ±1 ppm übertragen, in dem die Datenpakete des ankommenden Transportdatenstroms vom Internet-Protocol (IP)-Datenformat in ein geeignetes Datenformat (beispielsweise Asynchronous-Serial-Interface (ASI)) zur Übertragung an die einzelnen Sender gewandelt werden.

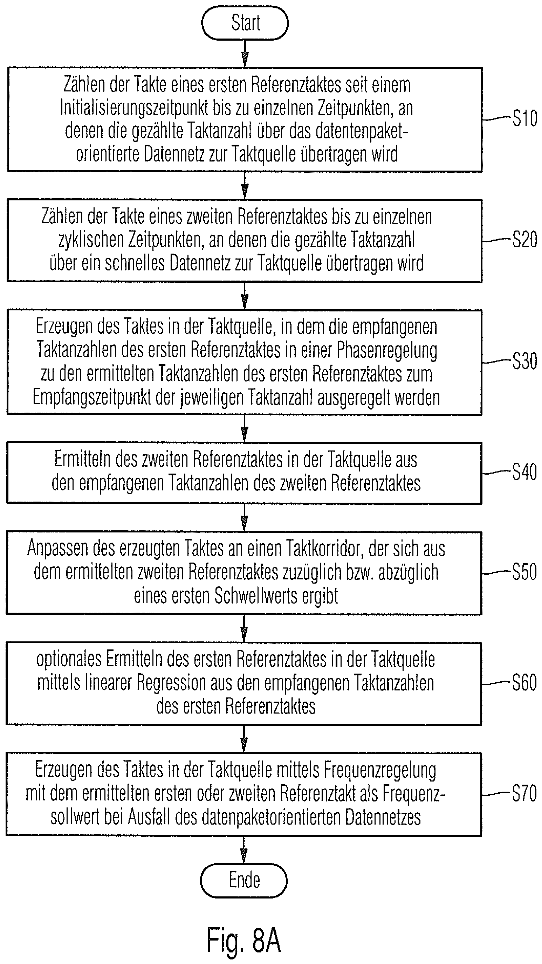

Im Folgenden wird die erste Ausführungsform des erfindungsgemäßen Verfahrens zur Optimierung einer Kurzzeitstabilität eines Taktes für eine Taktquelle in einem Prozessrechner, bevorzugt in einer Kopfstation einer Rundfunkstation, anhand des Flussdiagrammes in Fig. 8A unter Bezugnahme auf das korrespondierende erfindungsgemäße System im Blockdiagramm der Fig. 4 vorgestellt:
Im ersten Verfahrensschritt S10 werden in mindestens einer ersten Referenztaktquelle, bevorzugt gemäß Fig. 4 in den NTP-Servern 1₁ bzw. 1₂, die Takte eines Taktgebers 2₁ bzw. 2₂, der Takt der UTC-Zeit, seit einem definierten bzw. vereinbarten Initialisierungszeitpunkt in jeweils einem in Fig. 4 nicht dargestellten Zähler gezählt. Erhält der einzelne NTP-Server 1₁ bzw. 1₂ von einem zugehörigen in der Kopfstation 7 integrierten Taktfilter 3₁ bzw. 3₂ zu einen bestimmten Zeitpunkt eine Zeitanfrage, so wird der Zählerstand des zum jeweiligen NTP-Server 1₁ bzw. 1₂ gehörigen Zählers zu diesem Zeitpunkt ausgelesen und in ein Datenpaket als Zeitstempelinformation zur Übertragung über das datenpaketorientierte Netzwerk 9 übertragen.

Nach dem Empfang des jeweiligen Datenpakets mit einer Zeitstempelinformation im zugehörigen Taktfilter 3₁ bzw. 3₂ ermittelt das zugehörige Taktfilter 3₁ bzw. 3₂ den Sendezeitpunkt des jeweiligen Datenpakets, das als Zeitstempelinformation eine Taktanzahl der zugehörigen ersten Referenztaktquelle 1₁ bzw. 1₂ zum Sendezeitpunkt enthält, als Mittelwert des Empfangszeitpunktes des eine Taktanzahl enthaltenden Datenpakets und des Sendezeitpunktes der zugehörigen Zeitanfrage durch das zugehörige Taktfilter 3₁ bzw. 3₂. Die Mittelwertbildung stellt lediglich eine Näherung dar. Genauere Ergebnisse für den Sendezeitpunkt ergeben sich, indem vom zugehörigen Taktfilter 3₁ bzw. 3₂ in kürzeren Zeitabständen mehrere Zeitanfragen an die zugehörigen Referenztaktquellen 1₁ bzw. 1₂ durchgeführt werden und in einer geeignet gewählten Mittelungsfunktion berücksichtigt werden.

Zusätzlich werden mittels eines NTP-Algorithmuses, wie oben schon erwähnt wurde, aus den von den einzelnen Taktfiltern 3₁ bzw. 3₂ jeweils empfangenen Taktzyklenanzahlen der zugehörigen ersten Referenztaktquellen 1₁ bzw. 1₂ in den zugehörigen Sendezeitpunkten die korrekteste Taktanzahl einer ersten Referenztaktquelle 1₁ oder 1₂ im zugehörigen Sendezeitpunkt ausgewählt. Zusätzlich werden in den Taktfiltern 3₁ bzw. 3₂ bzw. im NTP-Algorithmus die Taktzyklenanzahl der zugehörigen ersten Referenztaktquelle 1₁ bzw. 1₂ im Empfangszeitpunkt des eine Taktzyklenanzahl enthaltenden Datenpaketes in der Kopfstation 7 ermittelt, indem die in der Kopfstation 7 empfangene Taktzyklenanzahl der zugehörigen ersten Referenztaktquelle 1₁ bzw. 1₂ im zugehörigen Sendezeitpunkt um die ermittelbare Taktzyklenanzahl des ersten Referenztaktes zwischen dem jeweiligen Sendezeitpunkt des Datenpakets mit der Taktzyklenanzahl im jeweiligen NTP-Server 1₁ bzw. 1₂ und dem Empfangszeitpunkt des Datenpakets mit der Taktzyklenanzahl in der Kopfstation 7 bestimmt wird.

Im nächsten Verfahrensschritt S20 werden in mindestens einem Eingangs-Adapter 12₁ bzw. 12₂, dem jeweils eine zweite Referenztaktquelle 11₁ bzw. 11₂ zugeordnet ist, die Taktzyklen des von der zweiten Referenztaktquelle 11₁ bzw. 11₂ erzeugten zweiten Referenztaktes in einem zum jeweiligen Eingangs-Adapter 12₁ bzw. 12₂ gehörigen und in Fig. 4 nicht dargestellten Zähler gezählt. In zyklischen Zeitpunkten werden die jeweils gezählten Taktzyklenanzahlen der von den einzelnen zweiten Referenztaktquellen 11₁ bzw. 11₂ erzeugten zweiten Referenztakte über ein zweites Netzwerk 12, bevorzugt ein schnelles Hochgeschwindigkeitsnetzwerk, zur Kopfstation 7 übertragen. Analog zu Verfahrensschritt S10 werden in der Kopfstation 7 die Sendezeitpunkte der einzelne Datenpakete, die Taktzyklenanzahlen der einzelnen zweiten Referenztaktquellen 11₁ bzw. 11₂ beinhalten, ermittelt.

Auf der Basis der in den einzelnen Empfangszeitpunkten jeweils empfangenen Taktzyklenanzahlen der ausgewählten ersten Referenztaktquelle 1₁ oder 1₂ und der in den zugehörigen einzelnen Empfangszeitpunkten der Datenpakete mit Taktzyklenanzahlen des ersten Referenztaktes jeweils in der ausgewählten ersten Referenztaktquelle 1₁ oder 1₂ aktuell gezählten Taktzyklenanzahl wird im darauffolgenden Verfahrensschritt S30 im Rahmen einer Phasenregelung 6 der Takt der Taktquelle 8 erzeugt, indem die Differenz zwischen den einzelnen empfangenen Taktzyklenanzahlen der ausgewählten ersten Referenztaktquelle 1₁ oder 1₂ und den ermittelten Taktzyklenanzahlen der ausgewählten ersten Referenztaktquelle 1₁ oder 1₂ zu den Empfangszeitpunkten der die zugehörigen Taktzyklenanzahlen enthaltenden Datenpakete zu Null geregelt wird.

Im darauf folgenden Verfahrensschritt S40 werden zweite Referenztakte aus den empfangenen Taktzyklenanzahlen der zweiten Referenztaktquelle 11₁ bzw. 11₂ und den ermittelten Sendezeitpunkten der Datenpakete, die die jeweiligen Taktzyklenanzahlen der jeweiligen Referenztaktquelle 11₁ bzw. 11₂ enthalten, ermittelt. Falls die ermittelten zweiten Referenztakte jeweils keine Konstanz aufweisen, werden jeweils linearisierte zweite Referenztakte über eine bevorzugt lineare Regression über eine größere Anzahl von empfangenen Taktanzahlen ermittelt. Während in einer ersten Variante der Erfindung jeweils nur eine Referenztaktquelle Verwendung findet, werden in einer zweiten Variante der Erfindung mehrere Referenztaktquellen 11₁, 11₂ usw. benutzt. Mittels einer Mitteilung über die einzelnen linearisierten oder nicht linearisierten zweiten Referenztakte wird ein zweiter Referenztakt mit einer vergleichsweise hohen Frequenzgenauigkeit erzielt, der dem in Fig. 7 dargestellten korrekten zweiten Referenztakt schon sehr nahe kommt.

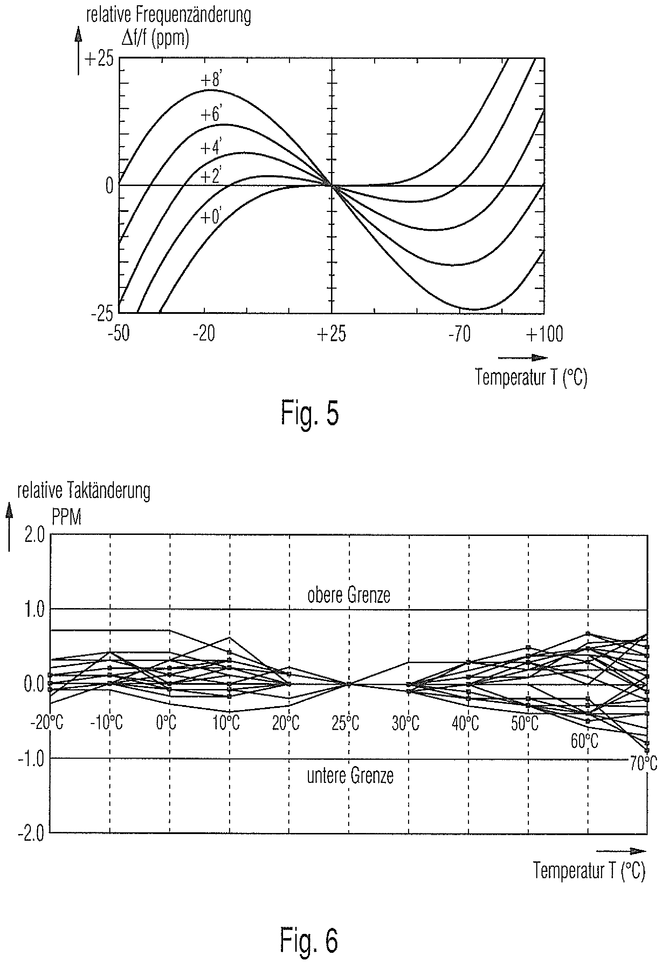

Die Frequenzoszillatoren der einzelnen Referenztaktquellen 11₁ bzw. 11₂ sind bevorzugt temperaturkompensiert. Eine Abhängigkeit zwischen der relativen Frequenzabhängigkeit eines nicht temperaturkompensierten Frequenzoszillators von der Umgebungstemperatur entsprechend Fig. 5 liegt folglich nicht vor. Vielmehr sind die relativen Frequenzschwankungen der einzelnen temperaturkompensierten Frequenzoszillatoren in Abhängigkeit der Temperatur deutlich schwächer ausgeprägt und schwanken entsprechend Fig. 6 aufgrund von Ungenauigkeiten und Exemplarstreuungen und Kompensationsungenauigkeiten der Temperaturkompensation deutlich geringer. Eine Mittelung über die einzelnen zweiten Referenztakte, die von temperaturkompensierten Frequenzoszillatoren erzeugt werden, führt zu einer deutlich geringeren Frequenzungenauigkeit des somit gemittelten zweiten Referenztaktes.

Im nächsten Verfahrensschritt S50 wird der vom Phasenregelkreis 6 erzeugte Takt an einen Takt-Korridor angepasst, der dem im vorherigen Verfahrensschritt S40 ermittelten zweiten Referenztakt zuzüglich bzw. abzüglich eines geeignet einstellbaren ersten Schwellwerts entspricht. Liegt der vom Phasenregelkreis 6 erzeugte Takt außerhalb dieses Takt-Korridors, so wird der erzeugte Takt an die Taktgrenze des Takt-Korridors mittels eines übergeordneten Frequenzregelkreises geführt, der dem erzeugten Takt am nächsten liegt.

In Äquivalenz zur Ermittlung des zweiten Referenztaktes in Verfahrensschritt S40 wird in einem nächsten optional durchzuführenden Verfahrensschritt S60 in der Kopfstation 7 aus den einzelnen in der Kopfstation 7 empfangenen Taktanzahlen des ersten Referenztaktes und den tatsächlich kumulierten Taktanzahlen des ersten Referenztaktes zu den Empfangszeitpunkten der einzelnen Datenpakete, die Taktzyklenanzahlen des ersten Referenztaktes enthalten, mittels bevorzugt linearer Regression ein erster Referenztakt ermittelt.

Im abschließenden Verfahrensschritt S70 wird bei Ausfall des datenpaketorientierten Netzwerkes 9 mittels einer Frequenzregelung der Takt der Taktquelle 8 mit dem bis zum Ausfallzeitpunkt des datenpaketorientierten Netzwerkes 9 mittels linearer Regression ermittelten ersten Referenztakt als Frequenzsollwert erzeugt. Ein Takt der Taktquelle 8 mit einer höheren Genauigkeit wird durch Benutzung des in Verfahrensschritt S40 ermittelten zweiten Referenztaktes als Frequenzsollwert der Frequenzregelung erzielt, da der zweite Referenztakt auch während des Ausfalls des datenpaketorientiertes Netzwerkes 9 in der Kopfstation 7 ermittelbar ist. Sobald ein korrekter Betrieb des datenpaketorientiertes Netzwerkes 9 wieder vorliegt, kann für die Erzeugung des Taktes der Taktquelle 8 von der Frequenzregelung wieder auf eine Phasenregelung umgeschaltet werden.

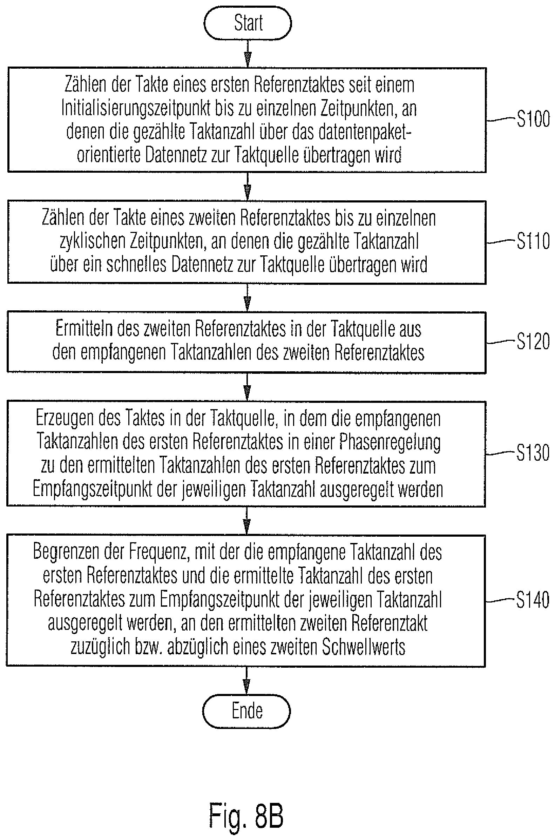

Im Folgenden wird die zweite Ausführungsform des erfindungsgemäßen Verfahrens zur Optimierung einer Kurzzeitstabilität eines Taktes für eine Taktquelle in einem Prozessrechner, bevorzugt in einer Kopfstation einer Rundfunkstation, anhand des Flussdiagrammes in Fig. 8B unter Bezugnahme auf das korrespondierende erfindungsgemäße System im Blockdiagramm der Fig. 4 vorgestellt.

Die ersten Verfahrensschritte S100, S110 und S120 der zweiten Ausführungsform entsprechen den Verfahrensschritten S10, S20 und S40 der ersten Ausführungsform und werden deshalb an dieser Stelle nicht mehr erläutert.

Im darauf folgenden Verfahrensschritt S130 wird der Takt der Taktquelle 8 in einem Phasenregelkreis ermittelt, in dem die Phasendifferenz zwischen den einzelnen empfangenen Taktanzahlen des ersten Referenztaktes und den in der Kopfstation 7 ermittelten Taktanzahlen des ersten Referenztaktes zu den Empfangszeitpunkten der einzelnen Datenpakete, die jeweils Taktanzahlen des ersten Referenztaktes enthalten, in der Kopfstation 7 ausgeregelt werden.

Innerhalb der Phasenregelung wird im abschließenden Verfahrensschritt S140, der zeitparallel zum Verfahrensschritt S130 durchgeführt wird, die Frequenz des spannungsgesteuerten Frequenzoszillators innerhalb des Phasenregelkreises, mit dem die einzelnen empfangenen Taktanzahlen des ersten Referenztaktes an die ermittelten Taktanzahlen des ersten Referenztaktes in den Empfangszeitpunkten der Datenpakete mit Taktanzahlen des ersten Referenztaktes und damit der in der Taktquelle 8 erzeugte Takt an den ersten Referenztakt geregelt werden, auf einen Frequenz-Korridor begrenzt, der durch den ermittelten zweiten Referenztakt zuzüglich bzw. abzüglich eines einstellbaren zweiten Schwellwerts eingestellt wird.

Optional können in der zweiten Ausführungsform auch noch die in der ersten Ausführungsform vorhandenen Verfahrensschritte S60 und S70 im Anschluss an den Verfahrensschritt S140 durchgeführt werden.

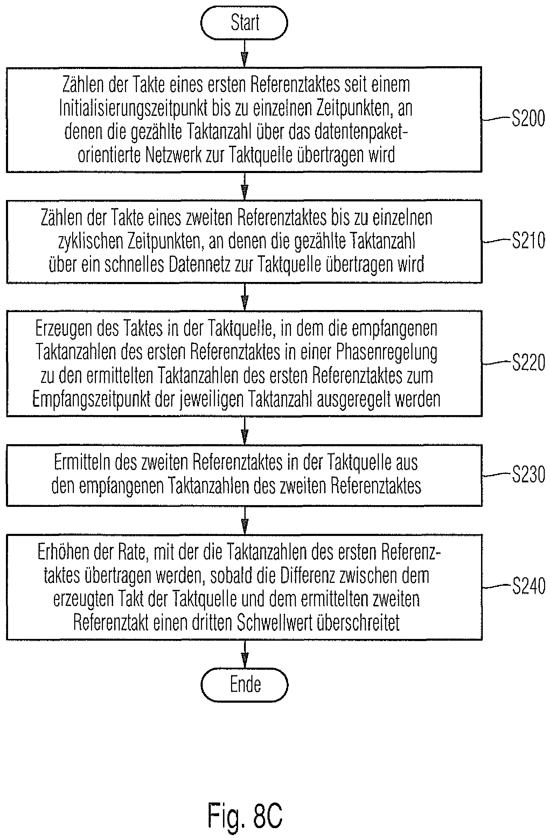

Im Folgenden wird die dritte Ausführungsform des erfindungsgemäßen Verfahrens zur Optimierung einer Kurzzeitstabilität eines Taktes für eine Taktquelle in einem Prozessrechner, bevorzugt in einer Kopfstation einer Rundfunkstation, anhand des Flussdiagrammes in Fig. 8C unter Bezugnahme auf das korrespondierende erfindungsgemäße System im Blockdiagramm der Fig. 4 vorgestellt.

Die Verfahrensschritte S200, S210, S220, S230 der dritten Ausführungsform entsprechen den Verfahrensschritten S10, S20, S30 und S40 der ersten Ausführungsform.

Im abschließenden Verfahrensschritt S240 wird die Rate erhöht, mit der die einzelnen Taktanzahlen des ersten Referenztaktes von der Kopfstation 7 bei den einzelnen NTP-Servern 1₁ bzw. 1₂ und deren zugehörigen ersten Referenztaktquellen 2₁ bzw. 2₂ abgefragt werden, sobald die Differenz zwischen dem erzeugten Takt der Taktquelle 8 und dem ermittelten zweiten Referenztakt einen einstellbaren dritten Schwellwert überschreitet.

## Patentansprüche

1. Verfahren zur Optimierung einer Kurzzeitstabilität eines Taktes einer mit einer ersten langzeitstabilen Referenztaktquelle synchronisierten Taktquelle mit folgenden Verfahrensschritten:
Übertragen von Taktzyklenanzahlen eines ersten Referenztaktes der ersten Referenztaktquelle (2₁, 2₂, 2₃, 2₄) zwischen einem Initialisierungszeitpunkt und jeweils mehreren Zeitpunkten in einem datenpaketorientierten Netzwerk (9) zur Taktquelle (8),
Einstellen des Taktes der Taktquelle (8) mittels Phasenausregeln einer Differenz zwischen in der Taktquelle (8) empfangenen Taktzyklenanzahlen des ersten Referenztaktes und in der Taktquelle ermittelten Taktzyklenanzahlen des ersten Referenztaktes zwischen dem Initialisierungszeitpunkt und den jeweiligen Empfangszeitpunkten der Taktzyklenanzahlen des ersten Referenztaktes, wobei die empfangenen Taktzyklenanzahlen des ersten Referenztaktes mit einer Frequenz eines in einem Regelkreis zum Phasenausregeln integrierten Frequenzoszillators angepasst werden,
Übertragen von Taktzyklenanzahlen eines zweiten Referenztaktes des Datenpakets, das die Taktzyklenanzahl von mindestens einer zweiten freilaufenden Referenztaktquelle (11₁, 11₂) enthält, in einzelnen Zeitpunkten zur Taktquelle (8), und
Begrenzen der Differenz zwischen dem Takt der Taktquelle (8) und dem zweiten Referenztakt auf einen ersten einstellbaren Schwellwert.

2. Verfahren nach Anspruch 1,
**dadurch gekennzeichnet,**
**dass** der Takt der Taktquelle in einer überlagerten Frequenzregelung so geregelt wird, dass die Differenz zwischen dem Takt der Taktquelle (8) und dem zweiten Referenztakt kleiner als der erste einstellbare Schwellwert ist.

3. Verfahren nach Anspruch 1 oder 2,
**dadurch gekennzeichnet,**
**dass** die Differenz zwischen der Frequenz, mit der die Differenz zwischen dem Takt der Taktquelle (8) und dem ersten Referenztakt in einer Phasenregelung (6) ausgeregelt wird, und dem zweiten Referenztakt auf einen zweiten Schwellwert begrenzt wird.

4. Verfahren nach einem der Ansprüche 1 bis 3,
**dadurch gekennzeichnet,**
**dass** die Taktzyklenanzahlen des zweiten Referenztaktes der jeweiligen zweiten Referenztaktquellen (11₁, 11₂) jeweils in periodischen Zeitpunkten übertragen werden und aus den empfangenen Taktzyklenanzahlen des zweiten Referenztaktes der jeweiligen zweiten Referenztaktquellen (11₁, 11₂) in der Taktquelle (8) ein zweiter Referenztakt der jeweiligen zweiten Referenztaktquellen (11₁, 11₂) ermittelt wird.

5. Verfahren nach einem der Ansprüche 1 bis 4,
**dadurch gekennzeichnet,**
**dass** der zweite Referenztakt einer einzigen zweiten Referenztaktquelle (11₁) in der Taktquelle ermittelt wird.

6. Verfahren nach einem der Ansprüche 1 bis 4,
**dadurch gekennzeichnet,**
**dass** der zweite Referenztakt durch Mittelung der von mehreren zweiten Referenztaktquellen (11₁, 11₂) jeweils erzeugten zweiten Referenztakte in der Taktquelle (8) ermittelt wird.

7. Verfahren nach Anspruch 6,
**dadurch gekennzeichnet,**
**dass** die zweiten Referenztaktquellen (11₁, 11₂) jeweils einen temperaturkompensierten Quarzoszillator aufweisen.

8. Verfahren nach einem der Ansprüche 1 bis 7,
**dadurch gekennzeichnet,**
**dass** im Fall eines Ausfalls des datenpaketorientierten Netzwerkes (9) der zweite Referenztakt kontinuierlich aus den empfangenen Taktzyklenanzahlen des zweiten Referenztaktes mittels Regression ermittelt wird und der Takt der Taktquelle (8) in einer Frequenzregelung mit dem ermittelten zweiten Referenztakt als Frequenzsollwert ermittelt wird.

9. Verfahren nach einem der Ansprüche 1 bis 7,
**dadurch gekennzeichnet,**
**dass** im Fall eines Ausfalls des datenpaketorientierten Netzwerkes (9) der erste Referenztakt aus den bis zum Ausfall empfangenen Taktzyklenanzahlen des ersten Referenztaktes mittels Regression ermittelt wird und der Takt der Taktquelle (8) in einer Frequenzregelung mit dem ermittelten ersten Referenztakt als Frequenzsollwert ermittelt wird.

10. Verfahren nach einem der Ansprüche 1 bis 9,
**dadurch gekennzeichnet,**
**dass** die Rate, mit der die Taktzyklenanzahlen des ersten Referenztaktes zur Taktquelle (8) übertragen werden, erhöht wird, sobald die Differenz zwischen dem Takt der Taktquelle (8) und dem zweiten Referenztakt einen dritten einstellbaren Schwellwert überschreitet.

11. Verfahren nach einem der Ansprüche 1 bis 10,
**dadurch gekennzeichnet,**
**dass** die maximale Differenz zwischen dem ersten und dem zweiten Referenztakt der Taktquelle (8) bekannt oder vorgegeben ist.

12. System zur Optimierung einer Kurzzeitstabilität eines Taktes einer mit einer ersten langzeitstabilen Referenztaktquelle synchronisierten Taktquelle mit
der ersten Referenztaktquelle (2₁, 2₂, 2₃, 2₄) zur Ermittlung von Taktzyklenanzahlen eines ersten Referenztaktes zwischen einem Initialisierungszeitpunkt und jeweils mehreren Zeitpunkten,
einem datenpaketorientierten Netzwerk (9) zur Übertragung der von der ersten Referenztaktquelle (2₁, 2₂, 2₃, 2₄) ermittelten Taktzyklenanzahlen des ersten Referenztaktes,
mindestens einer zweiten freilaufenden Referenztaktquelle (11₁, 11₂) zur Ermittlung von Taktzyklenanzahlen eines zweiten Referenztaktes zwischen dem Initialisierungszeitpunkt und den jeweiligen Zeitpunkten,
einem zweiten Netzwerk (12) zur Übertragung der von jeder zweiten Referenztaktquelle (11₁, 11₂) jeweils ermittelten Taktzyklenanzahlen des zweiten Referenztaktes und
einer Taktquelle (8) zur Ermittlung des Taktes mittels eines Regelkreises zum Phasenausregeln einer Differenz zwischen in der Taktquelle (8) empfangenen Taktzyklenanzahlen des ersten Referenztaktes und in der Taktquelle ermittelten Taktzyklenanzahlen des ersten Referenztaktes zwischen dem Initialisierungszeitpunkt und den jeweiligen Empfangszeitpunkten der Taktzyklenanzahlen des ersten Referenztaktes und mit einem Begrenzer zum Begrenzen der Differenz zwischen dem Takt der Taktquelle (8) und den empfangenen Taktzyklenanzahlen des zweiten Referenztaktes auf einen ersten einstellbaren Schwellwert, wobei eine Anpassung der empfangenen Taktzyklenanzahlen des ersten Referenztaktes mit einer Frequenz eines im Regelkreis integrierten Frequenzoszillators erfolgt.

13. System nach Anspruch 12,
**dadurch gekennzeichnet,**
**dass** die zweiten Referenztaktquellen (11₁, 11₂) jeweils einen temperaturkompensierten Quarzoszillator aufweisen.

14. System nach Anspruch 12 oder 13,
**dadurch gekennzeichnet,**
**dass** das zweite Netzwerk (12) ein lokales Hochgeschwindigkeitsnetzwerk ist.

15. System nach einem der Ansprüche 12 bis 14, **dadurch gekennzeichnet,**
**dass** die maximale Differenz zwischen dem ersten Referenztakt und jedem zweiten Referenztakt der Taktquelle (8) bekannt oder vorgegeben ist.

## Claims

1. A method for optimising a short-term stability of a clock pulse of a clock source synchronised with a first longterm stable reference-clock source with the following method steps:
Transmission of clock-cycle numbers of a first reference clock of the first reference-clock source (2₁, 2₂, 2₃, 2₄) to the clock source (8) between an initialisation time and, in each case, several times, within a data-packet orientated network (9),
Adjustment of the clock pulse of the clock source (8) by controlling a difference between clock-cycle numbers of the first reference clock received in the clock source (8) and clock-cycle numbers of the first reference clock between the initialisation time and the respective reception times of the clock-cycle numbers of the first reference clock, wherein the received clock-cycle numbers of the first reference clock are matched with a frequency of a frequency oscillator integrated in a phase-locked loop for the controlling,
Transmission of clock-cycle numbers of a second reference clock of the data packet which receives the clock-cycle number from at least one second, free-running reference-clock source (11₁, 11₂) at individual times to the clock source (8), and
Limiting of the difference between the clock pulse of the clock source (8) and each second reference clock to a first adjustable threshold value.

2. The method according to claim 1,
**characterised in that**
the clock pulse of the clock source in a superposed frequency control is controlled in such a manner that the difference between the clock pulse of the clock source (8) and the second reference clock is less than the first adjustable threshold value.

3. The method according to claim 1 or 2,
**characterised in that**
the difference between the frequency with which the difference between the clock pulse of the clock source (8) and the first reference clock is controlled within a phase-locked loop (6) and the second reference clock is limited to a second threshold value.

4. The method according to any one of claims 1 to 3,
**characterised in that**
the clock-cycle numbers of the second reference clock of the respective second reference-clock sources (11₁, 11₂) are each transmitted at periodic times, and a second reference clock of the respective second reference-clock sources (11₁, 11₂) is determined from the received clock-cycle numbers of the second reference clock of the respective second reference-clock sources (11₁, 11₂) in the clock source (8).

5. The method according to any one of claims 1 to 4,
**characterised in that**
the second reference clock of a single, second reference-clock source (11₁) is determined in the clock source.

6. The method according to any one of claims 1 to 4,
**characterised in that**
the second reference clock is determined by averaging the second reference clocks in the clock source (8) generated respectively from several second reference-clock sources (11₁, 11₂).

7. The method according to claim 6,
**characterised in that**
the second reference-clock sources (11₁, 11₂) each provide a temperature-compensated quartz oscillator.

8. The method according to any one of claims 1 to 7,
**characterised in that,**
in the case of a failure of the data-packet orientated network (9), the second reference clock is determined continuously from the received clock-cycle numbers of the second reference clock by means of regression, and the clock pulse of the clock source (8) is determined within a frequency control with the determined second reference clock as the target frequency value.

9. The method according to any one of claims 1 to 7,
**characterised in that,**
in the case of a failure of the data-packet orientated network (9), the first reference clock is determined by means of regression from the clock-cycle numbers of the first reference clock received until the failure, and the clock pulse of the clock source (8) is determined within a frequency control with the determined first reference clock as the target frequency value.

10. The method according to any one of claims 1 to 9,
**characterised in that**
the rate with which the clock-cycle numbers of the first reference clock are transmitted to the clock source (8) is increased, as soon as the difference between the clock pulse of the clock source (8) and the second reference clock exceeds a third adjustable threshold value.

11. The method according to any one of claims 1 to 10,
**characterised in that**
the maximum difference between the first and the second reference clock of the clock source (8) is known or specified.

12. A system for optimising a short-term stability of a clock pulse of a clock source synchronised with a first longterm stable reference-clock source with
the first reference-clock source (2₁, 2₂, 2₃, 2₄) for determining clock-cycle numbers of a first reference clock between an initialisation time and, in each case, several times,
a data-packet orientated network (9) for transmitting clock-cycle numbers of the first reference clock determined from the first reference-clock source (2₁, 2₂, 2₃, 2₄),
at least one second, free-running reference-clock source (11₁, 11₂) for determining clock-cycle numbers of a second reference clock between the initialisation time and the respective times,
a second network (12) for transmitting the clock-cycle numbers of the second reference clock determined respectively from each second reference-clock source (11₁, 11₂) and
a clock source (8) for determining the clock pulse by means of a phase-locked loop for the controlling of a difference between clock-cycle numbers of the first reference clock received in the clock source (8) and clock-cycle numbers of the first reference clock determined in the clock source between the initialisation time and the respective reception times of the clock-cycle numbers of the first reference clock and with a limiter for limiting the difference between the clock pulse of the clock source (8) and the received clock-cycle numbers of the second reference clock to a first adjustable threshold value,
wherein a matching of the received clock-cycle numbers of the first reference clock with a frequency of a frequency oscillator integrated in the phase-locked loop takes place.

13. The system according to claim 12,
**characterised in that**
the second reference-clock sources (11₁, 11₂) each provide a temperature-compensated quartz oscillator.

14. The system according to claim 12 or 13,
**characterised in that**
the second network (12) is a local high-speed network.

15. The system according to any one of claims 12 to 14,
**characterised in that**
the maximum difference between the first reference clock and each second reference clock of the clock source (8) is known or specified.

## Revendications

1. Procédé d'optimisation d'une stabilité à court terme d'une horloge d'une source d'horloge synchronisée avec une première source d'horloge de référence stable à long terme, comprenant les étapes de procédé suivantes :
la transmission, à la source d'horloge (8), de nombres de cycles d'horloge d'une première horloge de référence de la première source d'horloge de référence (2₁, 2₂, 2₃, 2₄) entre un instant d'initialisation et respectivement plusieurs instants dans un réseau de transmission de données en mode paquet (9),
le réglage de l'horloge de la source d'horloge (8) par régulation de phase d'une différence entre les nombres de cycles d'horloge de la première horloge de référence reçus dans la source d'horloge (8) et les nombres de cycles d'horloge de la première horloge de référence déterminés dans la source d'horloge entre l'instant d'initialisation et les instants de réception respectifs des nombres de cycles d'horloge de la première horloge de référence, dans lequel les nombres de cycles d'horloge reçus de la première horloge de référence sont adaptés au moyen d'une fréquence d'un oscillateur à fréquence intégré dans un circuit de régulation aux fins de régulation de phase,
la transmission, à la source d'horloge (8), de nombres de cycles d'horloge d'une deuxième horloge de référence du paquet de données, qui contient le nombre de cycles d'horloge d'au moins une deuxième source d'horloge de référence (11₁, 11₂) non synchronisée, à différents instants, et
la limitation de la différence entre l'horloge de la source d'horloge (8) et la deuxième horloge de référence à une première valeur seuil réglable.

2. Procédé selon la revendication 1,
**caractérisé**
**en ce que** l'horloge de la source d'horloge est régulée dans une régulation de fréquence superposée, de sorte que la différence entre l'horloge de la source d'horloge (8) et la deuxième horloge de référence est inférieure à la première valeur seuil réglable.

3. Procédé selon la revendication 1 ou 2,
**caractérisé**
**en ce que** la différence entre la fréquence à laquelle la différence entre l'horloge de la source d'horloge (8) et la première horloge de référence est régulée au cours d'une régulation de phase (6) et la deuxième horloge de référence est limitée à une deuxième valeur seuil.

4. Procédé selon l'une quelconque des revendications 1 à 3,
**caractérisé**
**en ce que** les nombres de cycles d'horloge de la deuxième horloge de référence des deuxièmes sources d'horloge de référence (11₁, 11₂) respectives sont transmis respectivement par instants périodiques et une deuxième horloge de référence des deuxièmes sources d'horloge de référence (11₁, 11₂) respectives est déterminée à partir des nombres de cycles d'horloge reçus de la deuxième horloge de référence des deuxièmes sources d'horloge de référence (11₁, 11₂) respectives dans la source d'horloge (8).

5. Procédé selon l'une quelconque des revendications 1 à 4,
**caractérisé**
**en ce que** la deuxième horloge de référence d'une seule deuxième source d'horloge de référence (11₁) est déterminée dans la source d'horloge.

6. Procédé selon l'une quelconque des revendications 1 à 4,
**caractérisé**
**en ce que** la deuxième horloge de référence est déterminée par calcul de la moyenne des deuxièmes horloges de référence respectivement produites par plusieurs deuxièmes sources d'horloge de référence (11₁, 11₂) dans la source d'horloge (8).

7. Procédé selon la revendication 6,
**caractérisé**
**en ce que** les deuxièmes sources d'horloge de référence (11₁, 11₂) présentent respectivement un oscillateur à quartz compensé en température.

8. Procédé selon l'une quelconque des revendications 1 à 7,
**caractérisé**
**en ce que**, dans le cas d'une défaillance du réseau de données en mode paquet (9), la deuxième horloge de référence est déterminée en continu par régression à partir des nombres de cycles d'horloge reçus de la deuxième horloge de référence et l'horloge de la source d'horloge (8) est déterminée au cours d'une régulation de fréquence avec la deuxième horloge de référence déterminée en tant que valeur théorique de fréquence.

9. Procédé selon l'une quelconque des revendications 1 à 7,
**caractérisé**
**en ce que**, dans le cas d'une défaillance du réseau de transmission de données en mode paquet (9), la première horloge de référence est déterminée à partir des nombres de cycles d'horloge de la première horloge de référence reçues jusqu'à la défaillance et l'horloge de la source d'horloge (8) est déterminée en tant que valeur théorique de fréquence au cours d'une régulation de fréquence avec la première horloge de référence déterminée.

10. Procédé selon l'une quelconque des revendications 1 à 9,
**caractérisé**
**en ce que** la vitesse à laquelle les nombres de cycles d'horloge de la première horloge de référence sont transmis à la source d'horloge (8) est augmentée dès que la différence entre l'horloge de la source d'horloge (8) et la deuxième horloge de référence dépasse une troisième valeur seuil réglable.

11. Procédé selon l'une quelconque des revendications 1 à 10,
**caractérisé**
**en ce que** la différence maximale entre la première et la deuxième horloge de référence de la source d'horloge (8) est connue ou prédéfinie.

12. Système d'optimisation d'une stabilité à court terme d'une horloge d'une source d'horloge synchronisée avec une première source d'horloge de référence stable à long terme, au moyen
de la première source d'horloge de référence (2₁, 2₂, 2₃, 2₄) destinée à déterminer des nombres de cycles d'horloge d'une première horloge de référence entre un instant d'initialisation et respectivement plusieurs instants,
d'un réseau de transmission de données en mode paquet (9) destiné à transmettre des nombres de cycles d'horloge de la première horloge de référence déterminés par la première source d'horloge de référence (2₁, 2₂, 2₃, 2₄),
d'au moins une deuxième source d'horloge de référence (11₁, 11₂) non synchronisée destinée à déterminer des nombres de cycles d'horloge d'une deuxième horloge de référence entre l'instant d'initialisation et les instants respectifs,
d'un deuxième réseau (12) destiné à transmettre des nombres de cycles d'horloge de la deuxième horloge de référence respectivement déterminés par chaque deuxième source d'horloge de référence (11₁, 11₂) et
d'une source d'horloge (8) destinée à déterminer l'horloge au moyen d'un circuit de régulation pour la régulation de phase d'une différence entre les nombres de cycles d'horloge de la première horloge de référence reçus dans la source d'horloge (8) et les nombres de cycles d'horloge de la première horloge de référence déterminés dans la source d'horloge entre l'instant d'initialisation et les instants de réception respectifs des nombres de cycles d'horloge de la première horloge de référence et d'un limiteur destiné à limiter la différence entre l'horloge de la source d'horloge (8) et les nombres de cycles d'horloge reçus de la deuxième horloge de référence à une première valeur seuil réglable, dans lequel une adaptation des nombres de cycles d'horloge reçus de la première horloge de référence s'effectue au moyen d'une fréquence d'un oscillateur à fréquence intégré dans le circuit de régulation.

13. Système selon la revendication 12,
**caractérisé**
**en ce que** les deuxièmes sources d'horloge de référence (11₁, 11₂) présentent respectivement un oscillateur à quartz compensé en température.

14. Système selon la revendication 12 ou 13,
**caractérisé**
**en ce que** le deuxième réseau (12) est un réseau local à haute vitesse.

15. Système selon l'une quelconque des revendications 12 à 14,
**caractérisé**
**en ce que** la différence maximale entre la première horloge de référence et chaque deuxième horloge de référence de la source d'horloge (8) est connue ou prédéfinie.
